# EUROPÄISCHE PATENTSCHRIFT

(11) **EP 4 525 274 B1**
(45) Veröffentlichungstag und Bekanntmachung des Hinweises auf die Patenterteilung: **09.12.2026**
(21) Anmeldenummer: 24191803.6
(22) Anmeldetag: 30.07.2024
(51) Int. Cl.: H02K 1/32, H02K 7/04, H02K 9/19, H02K 1/276, H02K 15/12

(54) **ROTOR FÜR EINE ELEKTRISCHE MASCHINE**
ROTOR FOR AN ELECTRIC MACHINE
ROTOR POUR UNE MACHINE ÉLECTRIQUE

(30) Priorität: 18.09.2023 DE 102023209016
(43) Veröffentlichungstag der Anmeldung: 19.03.2025
(73) Patentinhaber: Robert Bosch GmbH, 70442 Stuttgart (DE)
(72) Erfinder: Bensing, Felix, 70437 Stuttgart (DE); Stammler, Jannik, 70197 Stuttgart (DE); Riedl, Johannes, 86673 Bergheim (DE); Kuehbacher, Daniel, 70569 Stuttgart (DE)

(56) Entgegenhaltungen:
- WO-A1-2013/136405
- CN-A- 115 173 602
- DE-A1- 102018 111 993
- DE-A1- 102020 215 450
- KR-A- 20180 037 757
- US-A1- 2019 190 358

## Beschreibung

### Stand der Technik

Die Erfindung geht aus von einem Rotor für eine elektrische Maschine nach der Gattung des Hauptanspruchs.

Es ist schon ein Rotor einer elektrischen Maschine aus der DE102019133532 A1 bekannt, mit einem auf der Rotorwelle angeordneten Rotorkörper, insbesondere einem Rotorblechpaket, und mit zumindest einer an einer der beiden Stirnseiten des Rotorkörpers angeordneten metallischen Wuchtscheibe, wobei im Rotorkörper in axialer Richtung bezüglich der Rotorachse verlaufende Kühlkanäle ausgebildet sind, die zur Kühlfluidversorgung mit einem Wellenkühlkanal der Rotorwelle strömungsverbunden sind. In der metallischen Wuchtscheibe sind Verbindungskanäle zur Fluidversorgung des Kühlpfads des Rotors vorgesehen. Die metallische Wuchtscheibe ist durch die Integration der Verbindungskanäle aufwendig herzustellen.

Aus den Dokumenten DE102018111993 A1, DE102020215450 A1, WO2013136405 A1, CN115173602 A, US2019190358 A1 und KR20180037757 A sind weitere Rotoren von elektrischen Maschinen bekannt.

### Vorteile der Erfindung

Der erfindungsgemäße Rotor für eine elektrische Maschine mit den kennzeichnenden Merkmalen des Hauptanspruchs hat demgegenüber den Vorteil, dass die Endscheibenanordnung einfacher und kostengünstiger herstellbar ist. Dies wird erfindungsgemäß erreicht, indem an eine oberste Decklamelle des Rotorkörpers eine Kunststoffscheibe fest angeformt ist, indem an der Kunststoffscheibe mehrere Verbindungskanäle jeweils als Einlass in einen der Kühlkanäle oder als Auslass aus einem der Kühlkanäle ausgebildet sind und indem die Verbindungskanäle der Kunststoffscheibe durch die metallische Wuchtscheibe überdeckt sind, insbesondere vollständig.

Erfindungsgemäß ist die Kunststoffscheibe mittels Spritzgussgießen oder mittels Transfermolden (Spritzpressen) an die Decklamelle angespritzt oder angegossen.

Durch das feste Anformen der Kunststoffscheibe an die oberste Decklamelle des Rotorkörpersdurch Spritzgussgießen oder Transfermoldenwird außerdem eine gute Abdichtung zwischen der Kunststoffscheibe und dem Rotorkörper erreicht, so dass zwischen der Kunststoffscheibe und dem Rotorkörper keine oder nur eine geringe Leckage von Kühlfluid aus den Kühlkanälen des Rotors auftritt. Weiterhin sind die Verbindungskanäle der Kunststoffscheibe erfindungsgemäß zur Wuchtscheibe hin offen ausgeführt, insbesondere als Durchgangsöffnung oder Durchgangsausnehmung ausgebildet. Dadurch können die Verbindungskanäle auf einfache Weise mittels von Werkzeugschiebern in der Kunststoffscheibe ausgeformt werden. Die offen ausgeführten Verbindungskanäle werden zum Verschließen oder Abdichten der Verbindungskanäle durch die Wuchtscheibe zumindest überwiegend abgedeckt. Durch die in den Unteransprüchen aufgeführten Maßnahmen sind vorteilhafte Weiterbildungen und Verbesserungen des im Hauptanspruch angegebenen Rotors für eine elektrische Maschine möglich.

Sehr vorteilhaft ist es, wenn der Rotorkörper Magnettaschen zur Aufnahme von Magneten, insbesondere Permanentmagneten, aufweist, wobei die Magnettaschen zur Fixierung der Magnete mit einer ausgehärteten Moldmasse ausgefüllt sind, die sich nach außerhalb der Magnettaschen erstreckt unter Bildung zumindest einer Kunststoffscheibe. Dadurch kann die Kunststoffscheibe im Zuge des Ausfüllens der Magnettaschen aus der Moldmasse miterzeugt werden. Die Moldmasse wird also zur Erzeugung der Kunststoffscheibe genutzt. Auf diese Weise werden die Herstellungskosten des Rotors verringert. Außerdem wird die Abdichtung zwischen dem jeweiligen Kühlkanal des Rotorkörpers und dem zugeordenten Verbindungskanal der Kunststoffscheibe verbessert. Weiterhin vorteilhaft ist, wenn die Kunststoffscheibe radial außerhalb der Kühlkanäle einen in Umfangsrichtung geschlossenen Ringabschnitt aufweist, an dem eine ringförmige Dichtfläche und/oder zumindest eine ring- oder teilringförmige Schulter zum Aufnehmen der Wuchtscheibe ausgebildet ist. Auf diese Weise wird in der Endscheibenanordnung eine gute Abdichtung der Verbindungskanäle erreicht.

Nach einer vorteilhaften ersten Art von Kanalverbindung kann der jeweilige Verbindungskanal den Kühlkanal mit dem Wellenkühlkanal strömungsverbinden und eine Eingangsverbindung in den Kühlkanal bilden. Auf diese Weise wird der jeweilige Kühlkanal mit Kühlfluid aus der Rotorwelle versorgt. Alternativ kann der jeweilige Verbindungskanal nach einer vorteilhaften zweiten Art von Kanalverbindung eine Ausgangsverbindung aus dem Kühlkanal bilden. Auf diese Weise wird ein Auslass aus dem jeweiligen Kühlkanal hergestellt. Die Ausgangsverbindung kann zurück in den Wellenkühlkanal oder in einen benachbarten Kühlkanal führen oder einen Auslass zum Versprühen des Kühlfluids bilden.

Darüber hinaus vorteilhaft ist, wenn an beiden Decklamellen des Rotorkörpers jeweils eine Kunststoffscheibe ausgeführt ist, wobei nach einer ersten Strömungsführungs-Variante jeder Kühlkanal an seinen einen Ende eine Eingangsverbindung und an seinem anderen Ende eine Ausgangsverbindung aufweist, wobei die Einlässe in die Kühlkanäle nach einem zweiten Ausführungsbeispiel nur in einer der beiden Kunststoffscheiben oder nach einem ersten Ausführungsbeispiel in beiden Kunststoffscheiben ausgebildet sind. Auf diese Weise wird beim zweiten Ausführungsbeispiel in den Kühlkanälen aller Rotorpole die gleiche Strömungsrichtung und beim ersten Ausführungsbeispiel eine entgegengesetzte Strömungsrichtung in den Kühlkanälen von benachbarten Rotorpolen eingestellt.

Desweiteren vorteilhaft ist, wenn an beiden Decklamellen des Rotorkörpers jeweils eine Kunststoffscheibe ausgeführt ist, wobei nach einem dritten Ausführungsbeispiel Einlässe in die Kühlkanäle im Rotorkörper zwischen den zwei Decklamellen des Rotorkörpers ausgebildet sind, insbesondere in einer Paketmitte, und wobei die Verbindungskanäle beider Kunststoffscheiben jeweils als Ausgangsverbindung ausgeführt sind. Auf diese Weise werden in jedem Kühlkanal, jeweils ausgehend vom Einlass in den jeweiligen Kühlkanal, zwei in entgegengesetzter Richtung verlaufende Strömungsrichtungen eingestellt. Vorteilhaft ist, wenn der Rotorkörper von einer Rotorhülse, insbesondere von einer mit Vorspannung direkt auf den Rotor gewickelten Faserverbundhülse, umschlossen ist und die jeweilige Kunststoffscheibe in radialer Richtung bis an den Umfang des Rotorkörpers reicht, wobei ein Wickelanfang oder ein Wickelende der Rotorhülse auf der Kunststoffscheibe liegt.

Die Erfindung betrifft weiterhin eine elektrische Maschine mit einem erfindungsgemäßen Rotor.

### Zeichnung

Drei Ausführungsbeispiele der Erfindung sind in der Zeichnung vereinfacht dargestellt und in der nachfolgenden Beschreibung näher erläutert.

Es zeigen:
Fig.1 im Schnitt eine elektrische Maschine mit einem Rotor, der zwei erfindungsgemäße Endscheibenanordnungen aufweist,
Fig.2 den Rotor nach Fig.1 mit einer Seitenansicht auf eine erfindungsgemäße Kunststoffscheibe einer der beiden Endscheibenanordnungen gemäß einem ersten Ausführungsbeispiel und
Fig.3 den Rotor nach Fig.1 mit einer Seitenansicht auf eine erfindungsgemäße Kunststoffscheibe einer der beiden Endscheibenanordnungen gemäß einem zweiten Ausführungsbeispiel.

### Beschreibung der Ausführungsbeispiele

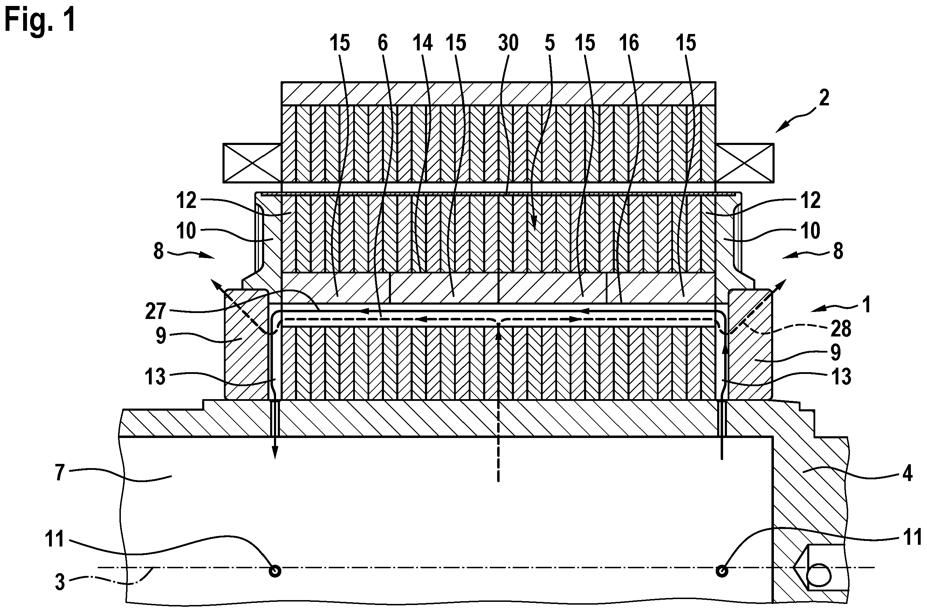

Fig.1 zeigt eine elektrische Maschine mit einem Rotor, der zwei erfindungsgemäße Endscheibenanordnungen aufweist.

Der erfindungsgemäße Rotor 1 für eine elektrische Maschine 2 weist eine um eine Rotorachse 3 drehbare Rotorwelle 4, einen mit der Rotorwelle 4 mechanisch gekoppelten Rotorkörper 5, insbesondere ein Rotorblechpaket, und zumindest eine an einer der beiden Stirnseiten des Rotorkörpers 5 angeordnete Endscheibenanordnung 8 auf. Die Endscheibenanordnung 8 umfasst eine Wuchtscheibe 9, die eine Metallscheibe ist. Im Rotorkörper 5 sind in axialer Richtung bezüglich der Rotorachse 3 verlaufende Kühlkanäle 6 ausgebildet, die zur Kühlfluidversorgung mit einem Wellenkühlkanal 7 der Rotorwelle 4 strömungsverbunden sind.

Erfindungsgemäß ist vorgesehen, dass an eine oberste Decklamelle 12 des Rotorkörpers 5 eine Kunststoffscheibe 10 fest angeformt ist, die Teil der Endscheibenanordnung 8 ist. An der Kunststoffscheibe 10 sind erfindungsgemäß mehrere Verbindungskanäle 13 ausgebildet, die jeweils als Einlass in einen der Kühlkanäle 6 oder als Auslass aus einem der Kühlkanäle 6 ausgeführt sind. Die Verbindungskanäle 13 der Kunststoffscheibe 10 sind erfindungsgemäß durch die Wuchtscheibe 9 zumindest teilweise überdeckt, insbesondere vollständig überdeckt.

Die Kunststoffscheibe 10 ist erfindungsgemäß mittels Spritzgussgießen oder mittels Transfermolden an die Decklamelle 12 angespritzt oder angegossen.

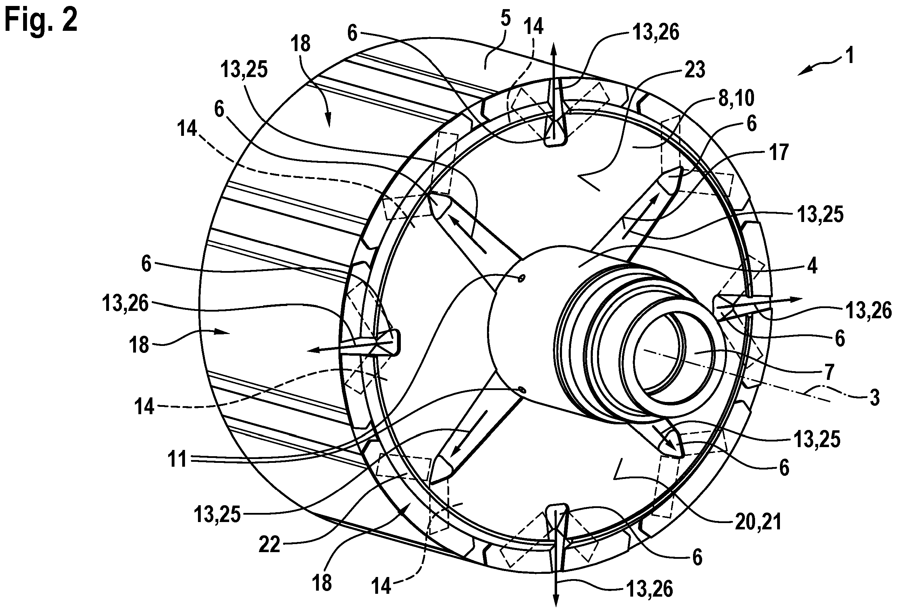

Fig.2 zeigt den Rotor nach Fig.1 mit einer Seitenansicht auf eine erfindungsgemäße Kunststoffscheibe einer der beiden Endscheibenanordnungen gemäß einem ersten Ausführungsbeispiel. Die Wuchtscheibe der Endscheibenanordnung ist in Fig.2 nicht dargestellt.

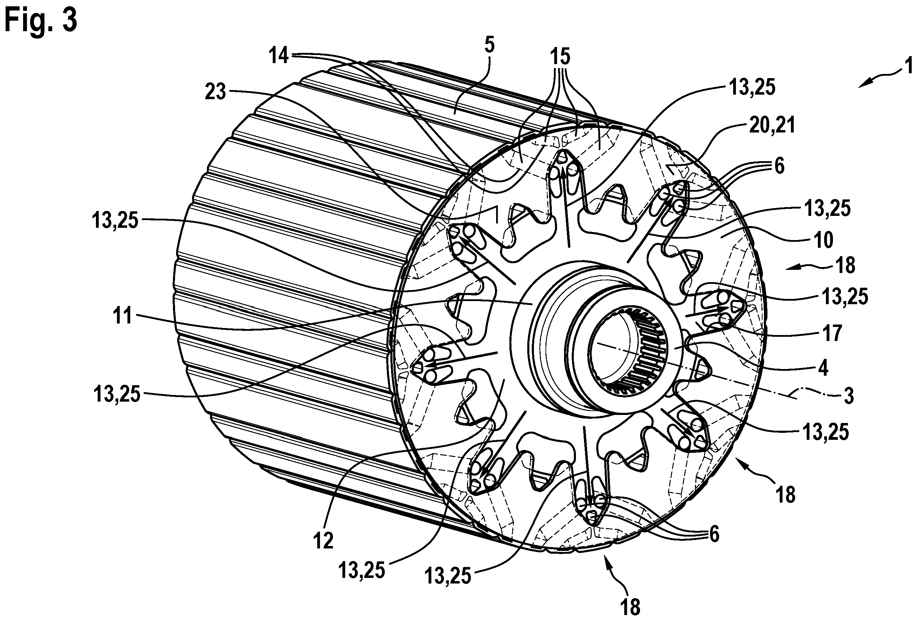

Fig.3 zeigt den Rotor nach Fig.1 mit einer Seitenansicht auf eine erfindungsgemäße Kunststoffscheibe einer der beiden Endscheibenanordnungen gemäß einem zweiten Ausführungsbeispiel. Die Wuchtscheibe der Endscheibenanordnung ist in Fig.3 nicht dargestellt.

Der Rotorkörper 5 kann Magnettaschen 14 zur Aufnahme von Magneten 15, insbesondere Permanentmagneten, aufweisen. Die Magnettaschen 14 können zur Fixierung der Magnete 15 mit einer ausgehärteten Moldmasse 16 ausgefüllt sein, die sich nach außerhalb der Magnettaschen 14 erstreckt unter Bildung zumindest einer Kunststoffscheibe 10. Die Kühlkanäle 6 können in der Moldmasse 16 der Magnettaschen 14 und/oder unmittelbar im Rotorblechpaket 5 ausgebildet sein.

Der Rotor 1 nach Fig.2 hat pro Rotorpol 18 beispielsweise eine V-förmige Magnetlage mit zumindest einer Magnettasche 14.

Der Rotor 1 nach Fig.3 hat pro Rotorpol 18 beispielsweise zwei V-förmige Magnetlagen mit jeweils zumindest einer Magnettasche 14.

Die Verbindungskanäle 13 der Kunststoffscheibe 10 sind erfindungsgemäß zur Wuchtscheibe 9 hin offen ausgeführt, insbesondere als Durchgangsöffnung oder Durchgangsausnehmung ausgebildet. Nach Fig.2 und Fig.3 sind die Verbindungskanäle beispielsweise durch eine sternförmige radial innere Randkontur 17 der Kunststoffscheibe 10 gebildet.

Die Kunststoffscheibe 10 kann radial außerhalb der Kühlkanäle 6 einen in Umfangsrichtung geschlossenen Ringabschnitt 20 umfassen, an dem eine ringförmige Dichtfläche 21 und/oder zumindest eine ring- oder teilringförmige Schulter 22 zum Aufnehmen der Wuchtscheibe 9 vorgesehen ist. Im Falle der Ausbildung einer Schulter 22 ist radial innerhalb der Schulter 22 eine Auflagefläche 23 zum Aufliegen der Wuchtscheibe 9 ausgeführt.

Der jeweilige Verbindungskanal 13 kann den Kühlkanal 6 mit dem Wellenkühlkanal 7 über eine Wellenöffnung 11 in der Rotorwelle 4 strömungsverbinden und eine Eingangsverbindung 25 in den Kühlkanal 6 bilden. Alternativ kann der jeweilige Verbindungskanal 13 eine Ausgangsverbindung 26 aus dem Kühlkanal 6 darstellen. Die Ausgangsverbindung 26 kann zurück in den Wellenkühlkanal 7 oder in einen benachbarten Kühlkanal 6 führen oder einen Auslass zum Versprühen des Kühlfluids bilden. Der Auslass zum Versprühen des Kühlfluids kann vom Kühlkanal 6 ausgehend gemäß Fig.2 bezüglich der Rotorachse 3 in der Kunststoffscheibe 10 nach radial außen oder gemäß einem alternativen Kühlpfad 28 in Fig.1 in der Kunststoffscheibe 10 nach radial innen verlaufen und dann durch eine Durchgangsöffnung in der Wuchtscheibe 9 geführt sein.

Nach Fig.1 ist an beiden Decklamellen 12 des Rotorkörpers 5 jeweils eine Kunststoffscheibe 10 ausgeführt.

Nach dem ersten und zweiten Ausführungsbeispiel weist jeder Kühlkanal 6 an seinen einen Ende eine Eingangsverbindung 25 und an seinem anderen Ende eine Ausgangsverbindung 26 auf. Dabei stellt sich beispielsweise der in Fig.1 mit Pfeilen dargestellte Kühlpfad 27 ein.

Die Einlässe in die Kühlkanäle 6 können nach dem zweiten Ausführungsbeispiel nur in einer der beiden (Fig.3) oder nach dem ersten Ausführungsbeispiel in beiden Kunststoffscheiben 10 (Fig.2) ausgebildet sein.

Nach einem dritten Ausführungsbeispiel können die Einlässe in die Kühlkanäle 6 im Rotorkörper 5 in axialer Richtung gesehen zwischen den zwei Decklamellen 12 des Rotorkörpers 5 vorgesehen sein, insbesondere in einer Paketmitte, wobei die Verbindungskanäle 13 beider Kunststoffscheiben 10 jeweils als Ausgangsverbindung 25 ausgeführt sind. Dadurch werden in jedem Kühlkanal 6, jeweils ausgehend vom Einlass in den jeweiligen Kühlkanal 6, zwei in entgegengesetzter Richtung verlaufende Strömungsrichtungen eingestellt. Die im jeweiligen Kühlkanal 6 in entgegengesetzter Richtung verlaufenden Strömungsrichtungen gemäß dem dritten Ausführungsbeispiel ergeben einen mit gestrichelten Pfeilen dargestellten alternativen Kühlpfad 28. Der Kühlpfad 28 führt über eine Ausgangsverbindung 26 in der Kunststoffscheibe 10 und eine Durchgangsöffnung in der Wuchtscheibe 9 nach außerhalb des Rotors 1. Die Ausgangsverbindung 26 gemäß dem alternativen Kühlpfad 28 ist im Gegensatz zum Kühlpfad 27 nicht mit dem Wellenkühlkanal 7 strömungsverbunden.

Nach Fig.1 kann der Rotorkörper 5 von einer Rotorhülse 30, insbesondere von einer mit Vorspannung direkt auf den Rotor 1 gewickelten Faserverbundhülse, umschlossen sein. Die jeweilige Kunststoffscheibe 10 kann in radialer Richtung bis an den Umfang des Rotorkörpers 5 reichen, so dass ein Wickelanfang und/oder ein Wickelende der Rotorhülse 30 am Umfang der Kunststoffscheibe 10 positioniert sein kann.

## Patentansprüche

1. Rotor für eine elektrische Maschine (2) mit einer um eine Rotorachse (3) drehbaren Rotorwelle (4), mit einem auf der Rotorwelle (4) angeordneten Rotorkörper (5), insbesondere einem Rotorblechpaket, und mit zumindest einer an einer der beiden Stirnseiten des Rotorkörpers (5) angeordneten Endscheibenanordnung (8), die eine metallische Wuchtscheibe (9) umfasst, wobei im Rotorkörper (5) in axialer Richtung bezüglich der Rotorachse (3) verlaufende Kühlkanäle (6) ausgebildet sind, die zur Kühlfluidversorgung mit einem Wellenkühlkanal (7) der Rotorwelle (4) strömungsverbunden sind, wobei der Rotorkörper (5) an den axialen Enden jeweils eine oberste Decklamelle (12) aufweist,
**dadurch gekennzeichnet, dass**
- an zumindest eine der obersten Decklamellen (12) des Rotorkörpers (5) eine Kunststoffscheibe (10) fest angeformt ist, die Teil der Endscheibenanordnung (8) ist,
- die Kunststoffscheibe (10) mittels Spritzgussgießen oder mittels Transfermolden an die Decklamelle (12) angespritzt oder angegossen ist,
- an der Kunststoffscheibe (10) mehrere Verbindungskanäle (13) jeweils als Einlass in einen der Kühlkanäle (6) oder als Auslass aus einem der Kühlkanäle (6) ausgebildet sind,
- die Verbindungskanäle (13) der Kunststoffscheibe (10) zur Wuchtscheibe (9) hin offen ausgeführt, insbesondere als Durchgangsöffnung oder Durchgangsausnehmung ausgebildet, sind und dass
- die Verbindungskanäle (13) der Kunststoffscheibe (10) durch die Wuchtscheibe (9) überdeckt sind, insbesondere vollständig.

2. Rotor nach Anspruch 1 , **dadurch gekennzeichnet, dass** der Rotorkörper (5) Magnettaschen (14) zur Aufnahme von Magneten (15), insbesondere Permanentmagneten, aufweist, wobei die Magnettaschen (14) zur Fixierung der Magnete (15) mit einer ausgehärteten Moldmasse (16) ausgefüllt sind, die sich nach außerhalb der Magnettaschen (14) erstreckt unter Bildung zumindest einer Kunststoffscheibe (10).

3. Rotor nach einem der vorhergehenden Ansprüche, **dadurch gekennzeichnet, dass** die Kunststoffscheibe (10) radial außerhalb der Kühlkanäle (6) einen in Umfangsrichtung geschlossenen Ringabschnitt (20) umfasst, an dem eine ringförmige Dichtfläche (21) und/oder zumindest eine ring- oder teilringförmige Schulter (22) zum Aufnehmen der Wuchtscheibe (9) ausgebildet ist.

4. Rotor nach einem der vorhergehenden Ansprüche, **dadurch gekennzeichnet, dass**
a. der jeweilige Verbindungskanal (13) den Kühlkanal (6) mit dem Wellenkühlkanal (7) strömungsverbindet und eine Eingangsverbindung (25) in den Kühlkanal (6) bildet, oder
b. der jeweilige Verbindungskanal (13) eine Ausgangsverbindung (26) aus dem Kühlkanal (6) bildet.

5. Rotor nach Anspruch 4 , **dadurch gekennzeichnet, dass** an beiden Decklamellen (12) des Rotorkörpers (5) jeweils eine Kunststoffscheibe (10) ausgeführt ist, wobei jeder Kühlkanal (6) an seinen einen Ende eine Eingangsverbindung (25) und an seinem anderen Ende eine Ausgangsverbindung (26) aufweist, wobei Einlässe in die Kühlkanäle (6) in einer der beiden oder in beiden Kunststoffscheiben (10) ausgebildet sind.

6. Rotor nach Anspruch 4 , **dadurch gekennzeichnet, dass** an beiden Decklamellen (12) des Rotorkörpers (5) jeweils eine Kunststoffscheibe (10) ausgeführt ist, wobei Einlässe in die Kühlkanäle (6) im Rotorkörper (5) zwischen den zwei Decklamellen (12) des Rotorkörpers (5) ausgebildet sind, insbesondere in einer Paketmitte, und wobei die Verbindungskanäle (13) beider Kunststoffscheiben (10) jeweils als Ausgangsverbindung (26) ausgeführt sind.

7. Rotor nach einem der vorhergehenden Ansprüche, **dadurch gekennzeichnet, dass** der Rotorkörper von einer Rotorhülse(30), insbesondere von einer mit Vorspannung direkt auf den Rotor (1) gewickelten Faserverbundhülse, umschlossen ist und die jeweilige Kunststoffscheibe (10) in radialer Richtung bis an den Umfang des Rotorkörpers (5) reicht, wobei ein Wickelanfang oder ein Wickelende der Rotorhülse (30) auf der Kunststoffscheibe (10) liegt.

8. Elektrische Maschine (2) mit einem Rotor (1) nach einem der vorhergehenden Ansprüche.

## Claims

1. Rotor for an electric machine (2) having a rotor shaft (4) rotatable about a rotor axis (3), having a rotor body (5) arranged on the rotor shaft (4), in particular a rotor laminated core, and having at least one end disc arrangement (8) arranged on one of the two end sides of the rotor body (5) and comprising a metallic balancing disc (9), wherein cooling channels (6) which run in the axial direction with respect to the rotor axis (3) and are connected in terms of flow to a shaft cooling channel (7) of the rotor shaft (4) for supplying cooling fluid are formed in the rotor body (5), wherein the rotor body (5) has a topmost covering lamination (12) at each of the axial ends,
**characterized in that**
- a plastic disc (10) which is part of the end disc arrangement (8) is permanently integrally formed on at least one of the topmost covering laminations (12) of the rotor body (5),
- the plastic disc (10) is injection-moulded or cast onto the covering lamination (12) by means of injection moulding or by means of transfer moulding,
- a plurality of connecting channels (13) are formed on the plastic disc (10) in each case as an inlet into one of the cooling channels (6) or as an outlet out of one of the cooling channels (6),
- the connecting channels (13) of the plastic disc (10) are designed to be open toward the balancing disc (9), in particular are in the form of a passage opening or passage recess, and **in that**
- the connecting channels (13) of the plastic disc (10) are, in particular completely, covered by the balancing disc (9).

2. Rotor according to Claim 1, **characterized in that** the rotor body (5) has magnet pockets (14) for receiving magnets (15), in particular permanent magnets, wherein the magnet pockets (14), for fixing the magnets (15), are filled with a cured moulding compound (16) which extends to outside the magnet pockets (14) so as to form at least one plastic disc (10).

3. Rotor according to either of the preceding claims, **characterized in that** the plastic disc (10) comprises, radially outside the cooling channels (6), an annular section (20) which is closed in the circumferential direction and on which an annular sealing surface (21) and/or at least one annular or partially annular shoulder (22) for receiving the balancing disc (9) is formed.

4. Rotor according to any of the preceding claims, **characterized in that**
a. the respective connecting channel (13) connects the cooling channel (6) to the shaft cooling channel (7) in terms of flow and forms an inlet connection (25) into the cooling channel (6), or
b. the respective connecting channel (13) forms an outlet connection (26) from the cooling channel (6).

5. Rotor according to Claim 4, **characterized in that** a plastic disc (10) is formed on each of the two covering laminations (12) of the rotor body (5), wherein each cooling channel (6) has an inlet connection (25) at one end and an outlet connection (26) at its other end, wherein inlets into the cooling channels (6) are formed in one of the two or in both plastic discs (10).

6. Rotor according to Claim 4, **characterized in that** a plastic disc (10) is formed on each of the two covering laminations (12) of the rotor body (5), wherein inlets into the cooling channels (6) in the rotor body (5) are formed between the two covering laminations (12) of the rotor body (5), in particular in a core centre, and wherein the connecting channels (13) of the two plastic discs (10) are each in the form of an outlet connection (26).

7. Rotor according to any of the preceding claims, **characterized in that** the rotor body is enclosed by a rotor sleeve (30), in particular by a fibre composite sleeve wound directly onto the rotor (1) with preload, and the respective plastic disc (10) extends as far as the circumference of the rotor body (5) in the radial direction, wherein a winding start or a winding end of the rotor sleeve (30) lies on the plastic disc (10).

8. Electric machine (2) having a rotor (1) according to any of the preceding claims.

## Revendications

1. Rotor pour une machine électrique (2) avec un arbre de rotor (4) pouvant tourner autour d'un axe de rotor (3), avec un corps de rotor (5) disposé sur l'arbre de rotor (4), en particulier un paquet de tôles de rotor, et avec au moins un ensemble de disques d'extrémité (8) disposé sur un des deux côtés frontaux du corps de rotor (5), qui comprend un disque d'équilibrage (9) métallique, des canaux de refroidissement (6) s'étendant dans la direction axiale par rapport à l'axe de rotor (3) étant formés dans le corps de rotor (5), qui sont en communication fluidique avec un canal de refroidissement d'arbre (7) de l'arbre de rotor (4) pour l'alimentation en fluide de refroidissement, le corps de rotor (5) comportant, sur les extrémités axiales, respectivement une lamelle de couverture (12) la plus haute,
**caractérisé en ce que**
- un disque en matière plastique (10), qui fait partie de l'ensemble de disques d'extrémité (8), est moulé de manière solidaire sur au moins une des lamelles de couverture (12) les plus hautes du corps de rotor (5),
- le disque en matière plastique (10) est appliqué par injection ou par coulée sur la lamelle de couverture (12) par moulage par injection ou au moyen de moules de transfert,
- plusieurs canaux de raccordement (13) sont formés chacun en tant qu'entrée dans un des canaux de refroidissement (6) ou tant que sortie de l'un des canaux de refroidissement (6) sur le disque en matière plastique (10),
- les canaux de raccordement (13) du disque en matière plastique (10) sont réalisés de manière ouverte en direction du disque d'équilibrage (9), en particulier sont formés en tant qu'ouverture de passage ou qu'évidement de passage, et que
- les canaux de raccordement (13) du disque en matière plastique (10) sont re-couverts, en particulier complètement, par le disque d'équilibrage (9).

2. Rotor selon la revendication 1, **caractérisé en ce que** le corps de rotor (5) comporte des poches magnétiques (14) pour recevoir des aimants (15), en particulier des aimants permanents, les poches magnétiques (14) destinées à fixer les aimants (15) étant remplies d'une masse moulée durcie (16) qui s'étend à l'extérieur des poches magnétiques (14) en formant au moins un disque en matière plastique (10).

3. Rotor selon l'une des revendications précédentes, **caractérisé en ce que** le disque en matière plastique (10) comporte radialement à l'extérieur des canaux de refroidissement (6) une section annulaire (20) fermée dans la direction périphérique, sur laquelle sont formés une surface d'étanchéité annulaire (21) et/ou au moins un épaulement annulaire ou en partie annulaire (22) pour recevoir le disque d'équilibrage (9).

4. Rotor selon l'une des revendications précédentes, **caractérisé en ce que**
a. le canal de raccordement (13) respectif raccorde en communication fluidique le canal de refroidissement (6) au canal de refroidissement d'arbre (7) et forme un raccordement d'entrée (25) dans le canal de refroidissement (6), ou
b. le canal de raccordement (13) respectif forme un raccordement de sortie (26) hors du canal de refroidissement (6).

5. Rotor selon la revendication 4, **caractérisé en ce qu'**est réalisé sur les deux lamelles de couverture (12) du corps de rotor (5) respectivement un disque en matière plastique (10), chaque canal de refroidissement (6) comportant sur une extrémité un raccordement d'entrée (25) et sur son autre extrémité un raccordement de sortie (26), des entrées dans les canaux de refroidissement (6) étant formées dans un des deux ou dans les deux disques en matière plastique (10).

6. Rotor selon la revendication 4, **caractérisé en ce qu'**un disque en matière plastique (10) est réalisé sur les deux lamelles de couverture (12) du corps de rotor (5), des entrées dans les canaux de refroidissement (6) étant formées dans le corps de rotor (5) entre les deux lamelles de couverture (12) du corps de rotor (5), en particulier dans un centre de paquet, et les canaux de raccordement (13) des deux disques en matière plastique (10) étant chacun réalisés comme un raccordement de sortie (26).

7. Rotor selon l'une des revendications précédentes, **caractérisé en ce que** le corps de rotor est entouré par un manchon de rotor (30), en particulier par un manchon composite de fibres enroulé directement sur le rotor (1) avec une précontrainte, et le disque en matière plastique (10) respectif s'étend dans la direction radiale jusqu'à la périphérie du corps de rotor (5), un début d'enroulement ou une fin d'enroulement du manchon de rotor (30) se trouvant sur le disque en matière plastique (10).

8. Machine électrique (2) avec un rotor (1) selon l'une des revendications précédentes.
